# FASCICULE DE BREVET EUROPEEN

(11) **EP 0 723 940 B1**
(45) Date de publication et mention de la délivrance du brevet: **08.04.1998**
(21) Numéro de dépôt: 95420366.7
(22) Date de dépôt: 22.12.1995
(51) Int. Cl.: C02F 5/08

(54) **Appareils électroménagers comportant un agent coexant pour empêcher la formation et le dépôt de tartre**
Haushaltgeräten mit einem Komplexbildner zum Verhindern von Ausscheidungen von Kesselstein
Electric household appliances using a complexing agent pour empêcher la formation et le dépôt de tartre dans des

(30) Priorité: 29.12.1994 FR 9415996
(43) Date de publication de la demande: 31.07.1996
(73) Titulaire: SEB S.A., 69130 Ecully (FR)
(72) Inventeur: Gabette, Luc, F-87150 Cussac (FR)

(56) Documents cités:
- EP-A- 0 461 959
- BE-A- 780 338

## Description

La présente invention se rapporte aux appareils électroménagers destinés à la préparation de boissons chaudes ou à la production de vapeur, comportant un réservoir d'eau, un moyen de chauffe apte à porter l'eau à une température au moins égale à 60°Celsius, ainsi qu'un moyen antitartre.

Tous les dispositifs et systèmes ayant recours à de l'eau chaude ou froide sont confrontés à un phénomène de formation et de dépôt de tartre, principalement dans les canalisations. Ces dépôts conduisent à une diminution des performances de l'appareil, à un vieillissement prématuré de certaines pièces diminuant la durée de vie générale de l'appareil et à un phénomène de corrosion.

Tous ces inconvénients sont bien connus et présents dans la plupart des appareils électroménagers dans lesquels le dépôt de carbonate de calcium dans les canalisations allonge en outre considérablement le temps de chauffe et d'obtention de la vapeur dans le cas des fers à repasser, et du café dans le cas de machines à café.

Pour lutter contre ce phénomène d'entartrage, divers moyens antitartre ont été à ce jour mis en oeuvre dans les appareils électroménagers. Il est ainsi possible d'avoir recours à des résines échangeuses d'ions dont le fonctionnement est satisfaisant de manière générale mais souffre néanmoins d'un certain nombre de désavantages liés en particulier à leur coût et à la nécessité de les régénérer régulièrement. Par ailleurs la reconnaissance du niveau de saturation de la résine n'est pas facilement repérable ce qui peut conduire à des périodes de fonctionnement dans lesquelles la résine est inactive. De surcroît les résines échangeuses d'ions ont la particularité de modifier l'équilibre physico-chimique de l'eau dans la mesure où un certain nombre de minéraux sont piégés dans la résine tels que le calcium et le magnésium, ces minéraux ne se retrouvant alors plus dans l'eau traitée. S'agissant d'appareils électroménagers destinés à la réalisation de boissons, le maintien de l'équilibre physico-chimique de l'eau et en particulier de son équilibre calco-carbonique est d'une importance capitale. Le recours à des résines échangeuses d'ions dans des appareils électroménagers destinés à la réalisation de boissons n'est d'ailleurs pas envisageable, l'eau obtenue étant d'une dureté trop faible (TH inférieur à 15) pour pouvoir satisfaire aux normes définissant une eau potable.

D'autres moyens antitartre ont été utilisés tels que des moyens antitartre de type magnétiques électriques ou à base de filtres, sans pour autant donner entière satisfaction.

Il a par ailleurs déjà été mentionné, dans le brevet BE-A-780 338, d'utiliser des polyphosphates en tant que produit chimique destinés à fixer le calcaire. Les polyphosphates sont disposés dans un boîtier qui est monté sur un robinet d'alimentation d'eau ou sur une conduite générale d'alimentation. Aucune application aux appareils électroménagers n'est envisagée.

L'objet de la présente invention vise en conséquence à remédier aux différents inconvénients énumérés précédemment et à fournir un appareil électroménager comportant un moyen antitartre particulièrement simple et peu encombrant à mettre en oeuvre, efficace en particulier à des températures au moins égales à 60°C.

Un autre objet de l'invention est de fournir un moyen antitartre utilisable dans une large gamme d'appareils électroménagers domestiques.

Un autre objet de l'invention vise également à proposer une nouvelle utilisation d'un agent complexant dans son application au domaine de l'électroménager.

Les objets assignés à l'invention sont atteints à l'aide d'un appareil électroménager comportant les caractéristiques de la revendication 1.

Les caractéristiques et avantages de l'invention ressortiront mieux à la lecture de la description donnée ci-après, à titre d'exemples non limitatifs, en référence aux dessins annexés dans lesquels :
- La figure 1 montre les courbes d'évolution de la concentration en calcium dans l'eau pour un appareil électroménager témoin et un appareil électroménager mettant en oeuvre le moyen antitartre conforme à l'invention.
- La figure 2 montre selon un schéma de principe simplifié, une cafetière électrique selon l'invention.
- La figure 3 montre selon un schéma de principe simplifié, un four à vapeur selon l'invention.

La présente invention consiste à mettre en contact le liquide destiné à circuler ou à séjourner dans un appareil électroménager avec un agent complexant à base de polyphosphates afin d'obtenir un précipité soluble dans ledit liquide, en l'occurrence l'eau, pour empêcher la formation et le dépôt de tartre dans l'appareil électroménager.

L'agent complexant est à base de polyphosphates dont la structure sensiblement linéaire a pour formule générale Mₙ₊₂ Pₙ O₃ₙ₊₁ dans laquelle :
- n varie de 6 à 30, et de préférence entre 18 et 22,
- P est du phosphore ; O est de l'oxygène ; M est un cation tel que du sodium, potassium, aluminium.

Les polyphosphates utilisés préférentiellement sont des silicopolyphosphates à longue chaîne (20° de polymérisation).

Il a en effet été montré que le phosphore qu'il soit sous forme minérale ou organique pouvait avoir par le biais des ions phosphates contenus dans l'eau une action antitartre sur des solutions saturées en calcium par addition de faibles doses d'inhibiteur de l'ordre de quelques milligrammes par litres et par exemple de l'ordre de 1 milligramme par litre.

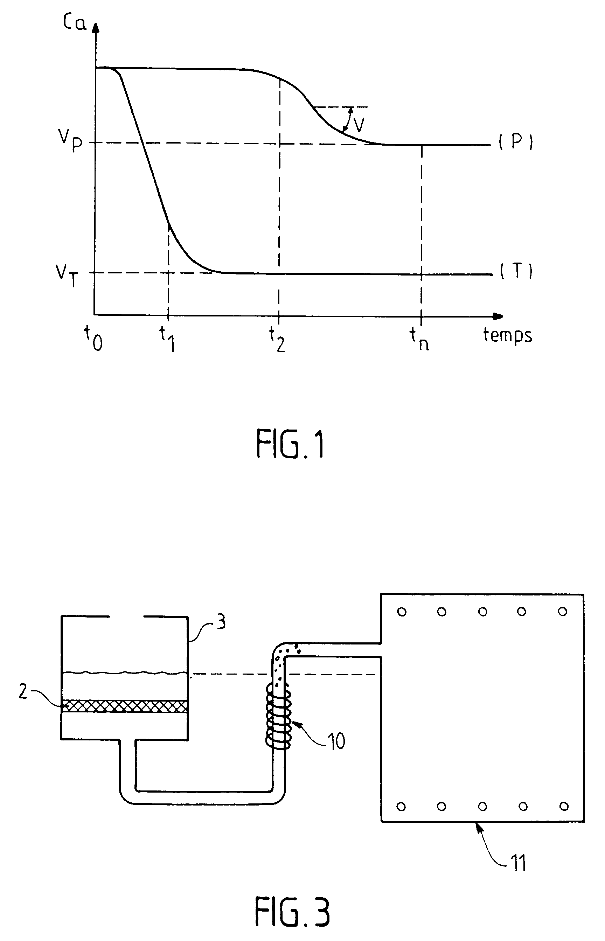

Tel que cela est montré à la figure 1 les essais menés ont permis de montrer que dans un appareil antitartre témoin la concentration en calcium mesurée dans l'eau d'entrée de l'appareil au temps tₒ décroissait ensuite de manière rapide dans le temps pour atteindre une valeur constante V_{T} à la sortie de l'appareil. Ce phénomène est montré de manière très claire par la courbe T de la figure 1 qui indique donc qu'une grande partie du calcium reste dans l'appareil électroménager témoin sous forme de dépôt de tartre dans le réservoir ou les canalisations de l'appareil. Le temps de germination correspondant à l'intervalle de temps t₁-t₀ est très court ce qui indique un début de cristallisation et de corrosion extrêmement rapide des cristaux calcaires contenus dans l'eau ainsi qu'une croissance rapide de l'élaboration du réseau cristallin du calcaire. La pente marquée de la courbe T indique également une vitesse de croissance rapide du tartre.

En revanche la courbe P qui montre l'évolution selon les mêmes mesures de temps, de la concentration en calcium dans l'eau d'un appareil électroménager mettant en oeuvre l'agent complexant à base de polyphosphates conforme à l'invention, montre des propriétés et effets antitartre significatifs. Ainsi le temps de germination matérialisé par l'intervalle de temps t₂-t₀ est beaucoup plus long et indique un retard dans la croissance des cristaux de calcaire ce qui diminue par conséquent le risque d'adhérence sur les parois de l'appareil. L'eau de sortie de l'appareil mesuré à l'instant tₙ comporte par ailleurs un niveau constant de calcium V_{P} nettement plus élevé que celui de l'appareil témoin exprimant le maintien du calcium dans l'eau de sortie. La quantité de calcium susceptible de se fixer dans l'appareil a donc nettement diminué et les risques d'entartrage sont donc proportionnellement plus faibles. Simultanément la vitesse de croissance des cristaux de calcaire est plus faible ce qui constitue un autre facteur positif.

En dehors de leur influence sur l'allongement du temps de germination, et sur la distorsion du réseau cristallin, les polyphosphates ont également une action sur le pouvoir dispersant des particules solides qui auraient tendance à s'agglomérer. Les polyphosphates ont en effet une aptitude à maintenir en suspension à l'état divisé les particules solides, cet effet s'exerçant soit au niveau d'un précipité déjà formé, soit au niveau des nucléis précédant la cristallisation.

Les polyphosphates ont également la propriété d'intégrer dans leurs molécules des anions ou des cations pour former des composés solubles ou stables évitant ainsi la formation de tartre.

Selon l'invention, les agents complexants à base de polyphosphates peuvent être directement utilisés dans des appareils électroménagers comportant un moyen de chauffe apte à porter l'eau à une température au moins égale et même supérieure à 60°C. Ainsi il était jusqu'à présent communément admis que les polyphosphates perdaient les propriétés mentionnées précédemment à partir de températures de l'ordre de 60°C en raison d'une transformation des polyphosphates en composés orthophosphates à ce niveau de température.

De préférence le liquide de l'appareil électroménager est mis en contact avec l'agent complexant à base de polyphosphates avant d'être porté à une température égale ou supérieure à 60°C et ce directement dans l'appareil même. Les essais conduits, notamment pour des cafetières, ont en effet montré une réduction significative des dépôts de tartre sur les appareils traités en comparaison avec des appareils témoins.

Selon l'invention, le liquide passe sur l'agent complexant à un débit moyen au moins égal à 50 ml/mn et de préférence compris entre 140 ml/mn et 800 ml/mn, afin de maîtriser la cinétique de transformation des polyphosphates en orthophosphates. Une plage moyenne de débit convenant particulièrement bien pour les cafetières est comprise entre 200 et 250 ml/mn. Pour les valeurs de débits mentionnées précédemment, la vitesse de transformation des polyphosphates en orthophosphates est suffisamment lente pour que le système continue à utiliser pleinement les effets bénéfiques antitartre des polyphosphates, même dans des appareils fonctionnant à des températures élevées.

L'agent complexant à base de polyphosphates est préférentiellement sous forme solide, et avantageusement sous forme d'une masse solide compacte, telle que des billes ou des fragments de formes diverses, apte à se déliter progressivement au contact du liquide pour se solubiliser.

Avantageusement la vitesse de délitement ou de dissolution est de l'ordre de 3g de polyphosphates pour 300 litres d'eau traitée, de manière à permettre une concentration en phosphore total (P₂o₅) dans le liquide inférieure à 5 mg/l, et de préférence comprise entre 0, 3 et 5 mg/l, la valeur préférentielle étant de l'ordre de 1 mg/l.

A titre de variante et selon les législations en vigueur dans certains pays, il est possible d'augmenter la concentration finale en phosphore total au delà de la valeur de 5 mg/l, pour atteindre par exemple 12 mg/l.

L'agent complexant peut également être sous forme poudreuse, voire même liquide.

Selon une variante préférentielle de l'invention, l'agent complexant est constitué de billes de silicopolyphosphates vitreux de marque "Siliphos" fabriquées par la Société GIULINI CHEMIE GmbH qui ont les caractéristiques suivantes :

| | |
|---|---|
| . Diamètre moyen | 18 mm |
| . Poids moyen | 9 grammes |
| . Point de fusion | 800°Celsius |
| . Masse volumique | 1 300 kg/m³ |
| . pH à 10 g/l (20°C) | 7,0 |
| . Composition chimique alcalin, alcalin terreux, polyphosphates, silicates vitreux | |

Dans un tel cas, et pour un pH de l'eau compris entre 6 et 9, le précipité obtenu par réaction entre les billes de polyphosphates et l'eau possède une solubilité résiduelle illimitée, en fonction de la température et pouvant varier de préférence entre 130 et 300 milligrammes par litres.

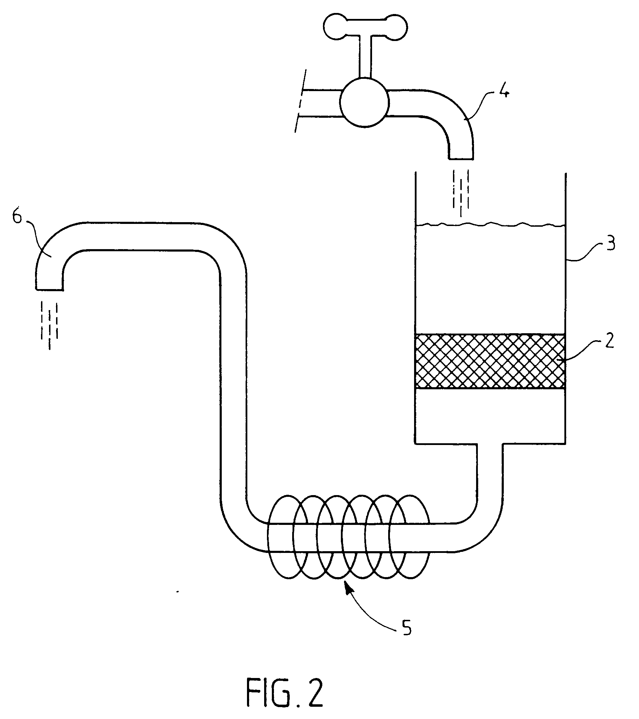

Selon une autre variante préférentielle de l'invention, l'agent complexant peut être un produit à base de fragments solides de polyphosphates ou de monophosphate, connu sous le nom de marque " Microphos Super" vendu par la Société BK LADENBURG. L'agent complexant est un polyphosphate de sodium et de calcium et/ou de magnésium, par exemple sous forme di- ou tri-phosphate. La composition des fragments peut comprendre, à titre d'exemple, entre 60 et 70% de polyphosphate (P₂O₅) et entre 2 et 4% d'oxyde de magnésium (MgO). Le reste de la formulation comprend du sodium et des traces de divers additifs.
Selon une application préférentielle de l'invention telle que montrée à la figure 2, les billes de polyphosphates 2 sont intégrées dans le circuit de transfert d'eau d'une machine à café. Les billes de polyphosphates 2 sont par exemple disposées dans le réservoir 3 sous forme libre ou insérées dans une cartouche. L'eau chargée en carbonate de calcium est versée dans le réservoir 3 et provient directement par exemple d'un robinet 4. Par contact avec les billes de polyphosphates l'eau se charge en produit complexant et s'échauffe au contact des résistances électriques 5 formant la chaudière de la machine à café. L'eau chargée en polyphosphates s'échauffe progressivement pour atteindre la température moyenne de l'ordre de 70 à 90°C en sortie de chaudière 5. La transformation sous l'effet de la température des polyphosphates en orthophosphates commence mais en raison du débit moyen d'eau de l'ordre de 200 ml/mn la cinétique de la réaction est très lente de sorte qu'en sortie de chaudière 5 à peine 1% des polyphosphates sont transformés en orthophosphates. L'eau arrive ensuite dans la douchette 6 de répartition d'eau située au dessus de la mouture de café (non représentée). A ce stade l'eau chaude comporte environ 60% de polyphosphates et 40% d'orthophosphates alors que dans la portion de trajet précédent la douchette 6, les proportions sont respectivement de l'ordre de 80% - 20%.

L'ensemble du circuit constituant la machine à café est donc protégé contre les dépôts de carbonate de calcium par des polyphosphates mélangés à l'eau dont la température dépasse 60°C.

Selon une autre variante de réalisation montrée à la figure 3, les polyphosphates peuvent être utilisés et conserver les propriétés mentionnées précédemment dans des générateurs de vapeur 10 associés à des fours 11 à vapeur d'eau surchauffée. Le principe de fonctionnement et d'utilisation des polyphosphates est identique au principe d'application pour les machines à café. Les billes de polyphosphate 2, ou toute autre présentation physique équivalente, sont disposées dans un réservoir 3 destiné à recevoir de l'eau. L'eau se charge en polyphosphates puis passe dans la chaudière verticale 10 où elle s'échauffe à une température de l'ordre de 100°C afin d'être transformée en vapeur pour atteindre l'enceinte du four 11. La ou les canalisation(s) liant le réservoir 3 à l'enceinte 11 sont donc protégées par les polyphosphates et accessoirement par les orthophosphates d'une façon identique à celle mentionnée dans l'application aux machines à café.

Selon un principe de réalisation identique à la variante mentionnée précédemment, l'invention peut être appliquée à des appareils électroménagers tels que des fers à repasser à vapeur reliés ou non à des générateurs de vapeur et plus généralement à tous générateurs de vapeur à usage domestique.

Dans toutes les applications mentionnées précédemment et plus particulièrement celles ayant une application conduisant à l'obtention d'un produit alimentaire ingérable par l'homme, le recours à des agents complexants à base de polyphosphates permet d'obtenir une eau parfaitement équilibrée. En effet en plus de l'effet bénéfique sur la réduction de l'entartrage, le recours à des agents à base de polyphosphates permet de conserver la quasi totalité du calcium et du magnésium dans l'eau. En effet ces éléments ne sont pas amenés à se déposer sur les parois de l'appareil mais au contraire demeurent en solution dans l'eau. Par ailleurs il a été observé que les polyphosphates en réduisant le temps de germination avaient pour effet de réduire ou d'éviter l'initiation de phénomènes de corrosion des métaux ce qui constitue un effet bénéfique secondaire à la fois sur la corrosion en elle-même, mais également sur le dépôt de tartre qui se dépose et croît prioritairement sur les points de corrosion.

## Revendications

1. Appareil électroménager destiné à la préparation de boissons chaudes ou à la production de vapeur, comportant un réservoir d'eau (3), un moyen de chauffe (5, 10) apte à porter l'eau à une température au moins égale à 60°Celsius, ainsi qu'un moyen antitartre (2), caractérisé en ce que le moyen antitartre (2) est un agent complexant à base de polyphosphates disposé de manière à être en contact avec l'eau pour être solubilisé dans cette dernière.

2. Appareil électroménager selon la revendication 1 dans lequel le débit de liquide à partir du réservoir (3) est au moins égal à 50 ml/mn et de préférence compris entre 140 et 800 ml/mn.

3. Appareil électroménager selon l'une des revendications 1 ou 2 susceptible de permettre une vitesse de délitement de l'agent complexant de l'ordre de 3g de polyphosphates pour 300 litres d'eau traitée afin de permettre une concentration en phosphore total dans le liquide inférieure à 5 mg/l, et de préférence comprise entre 0,3 et 5 mg/l.

4. Appareil électroménager selon l'une des revendications 1 à 3 caractérisé en ce que l'agent complexant est de formule générale
Mₙ₊₂ Pₙ O₃ₙ₊₁
dans laquelle n varie de 6 à 30, et de préférence entre 18 et 22 ; P = phosphore ; O = oxygène ; M = est un cation, tel que sodium, potassium, aluminium.

5. Appareil électroménager selon l'une des revendications 1 à 4 caractérisé en ce que l'agent complexant est formé de billes de polyphosphates vitreux.

6. Appareil électroménager selon l'une des revendications 1 à 5 caractérisé en ce qu'il est constitué d'une machine à café, d'un fer à repasser à vapeur, d'un générateur de vapeur ou d'un four à vapeur.

## Claims

1. A household appliance designed for preparing hot beverages or for producing steam, including a water tank (3), heater means (5, 10) capable of bringing the water to a temperature of at least 60° Celsius, and scale inhibitor means (2), said appliance being characterized in that the scale inhibitor means (2) comprise a polyphosphate-based complexing agent disposed so as to be in contact with the water in order to dissolve therein.

2. A household appliance according to claim 1, in which the flow rate of liquid from the tank (3) is at least 50 ml/min and preferably lies in the range 140 ml/min to 800 ml/min.

3. A household appliance according to claim 1 or 2, capable of allowing the complexing agent to disintegrate at a speed of about 3g of polyphosphate per 300 liters of treated water so as to allow a total concentration of phosphorus in the liquid of not more than 5 mg/*l*, and preferably lying in the range 0.3 mg/*l* to 5 mg/*l*.

4. A household appliance according to any one of claims 1 to 3, characterized in that the complexing agent has the general formula:
Mₙ₊₂PₙO₃ₙ₊₁
in which n lies in the range 6 to 30, and preferably lies in the range 18 to 22; P = phosphorus; O = oxygen; and M is a cation such as sodium, potassium, or aluminum.

5. A household appliance according to any one of claims 1 to 4, characterized in that the complexing agent is formed of vitreous polyphosphate balls.

6. A household appliance according to any one of claims 1 to 5, characterized in that it is constituted by a coffee machine, a steam iron, a steam generator, or a steam oven.

## Patentansprüche

1. Elektrohaushaltsgerät für die Zubereitung von Heißgetränken oder die Erzeugung von Dampf, mit einem Wasservorratsbehälter (3), einem Heizmittel (5, 10), welches das Wasser auf eine Temperatur von wenigstens 60°C bringen kann, sowie einem Kesselsteingegenmittel (2), dadurch gekennzeichnet, daß das Kesselsteingegenmittel (2) ein Komplexbildner auf der Basis von Polyphosphaten ist, der so angeordnet ist, daß er zur Auflösung in dem Wasser mit diesem in Berührung ist.

2. Elektrohaushaltsgerät nach Anspruch 1, bei dem der Flüssigkeitsdurchsatz vom Vorratsbehälter (3) wenigstens 50 ml/min. und vorzugsweise zwischen 140 und 800 ml/min. beträgt.

3. Elektrohaushaltsgerät nach einem der Ansprüche 1 oder 2, welches eine Freisetzungsgeschwindigkeit des Komplexbildners in der Größenordnung von 3g Polyphosphat je 300 Liter behandeltes Wasser ermöglicht, um eine Gesamtkonzentration von Phosphor in der Flüssigkeit von weniger als 5 mg/l und vorzugsweise zwischen 0,3 und 5 mg/l zu ermöglichen.

4. Elektrohaushaltsgerät nach einem der Ansprüche 1 bis 3, dadurch gekennzeichnet, daß der Komplexbildner die allgemeine Formel
Mₙ₊₂PₙO₃ₙ₊₁
hat, worin n zwischen 6 und 30, vorzugsweise zwischen 18 und 22, variiert, P = Phosphor, O = Sauerstoff und M ein Kation ist, beispielsweise Natrium, Kalium, Aluminium.

5. Elektrohaushaltsgerät nach einem der Ansprüche 1 bis 4, dadurch gekennzeichnet, daß der Komplexbildner aus glasartigen Polyphosphatkugeln gebildet ist.

6. Elektrohaushaltsgerät nach einem der Ansprüche 1 bis 5, dadurch gekennzeichnet, daß es aus einer Kaffeemaschine, einem Dampfbügeleisen, einem Dampferzeuger oder einem Dampfofen besteht.
